(19) 

Europäisches
Patentamt
European
Patent Office
Office européen
des brevets

(11) **EP 2 233 932 B1**

(12) **EUROPEAN PATENT SPECIFICATION**

(45) Date of publication and mention
of the grant of the patent:
**22.06.2011 Bulletin 2011/25**

(51) Int Cl.:
*G01P 3/68* *(2006.01)*     *G01P 3/36* *(2006.01)*
*A63B 69/36* *(2006.01)*

(21) Application number: **09462002.8**

(22) Date of filing: **26.03.2009**

(54) **Optical system and method for determining direction, velocity and position of a ball traversing a plane**

Optische Vorrichtung und Verfahren zum Bestimmen von Richtung, Geschwindigkeit und Ort eines eine Ebene querenden Balles

Dispositif et méthode optique pour déterminer la direction, la vitesse et la position d'une balle traversant une plaine

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(43) Date of publication of application:
**29.09.2010 Bulletin 2010/39**

(73) Proprietor: **Ental Kutatási, Fejlesztési és Tanácsadó Kft.**
**9024 Györ (HU)**

(72) Inventors:
• **Bozi, István**
**2640 Szendehely (HU)**
• **Molnárka, Gyözö**
**9024 Györ (HU)**

• **Mórocz, Tamás**
**9300 Csorna (HU)**
• **Nagy, Attila**
**9025 Györ (HU)**
• **Sütö, István**
**9444 Fertöszentmiklós (HU)**
• **Varjasi, Norbert**
**9028 Györ (HU)**

(74) Representative: **Harangozo, Gabor**
**Danubia**
**Patent & Law Office LLC**
**Bajcsy-Zsilinszky út 16**
**1051 Budapest (HU)**

(56) References cited:
**WO-A-01/00285     US-A- 5 481 355**
**US-A- 5 602 638**

**Description**

The present invention relates to an optical measuring system and a measuring method for determining the traveling direction, the velocity and the position of a ball traversing a measurement plane in ball games.

The US Patent No. 5,481,355 discloses an optical system for measuring the velocity and the horizontal and vertical angles of elevation of a spherical body, such as a golf ball. For measuring the above mentioned parameters, this measuring system comprises three optical detector stages, wherein the first stage is used to trigger time measurement, the second stage is used to measure the velocity, whereas the third stage is used to measure the angles of elevation in the direction of travel. This latter stage is constituted by a multi-beam measuring unit comprising a single optical transmitter and a plurality of optical detectors that are arranged in a plane crossing the traveling path of the ball. A drawback of this arrangement is that for measuring the velocity and the angles of elevation of the flying object, the system includes more than one detector unit that are separated from each other in the space, which is expensive on the one hand, and in the ball games, it limits the motion of the players on the court, in particular in collective games including gates, on the other hand.

The document WO 01/00285 discloses a method and apparatus for a portable golf training system with an optical sensor net. In this system, an asymmetrical sensor net is provided by an L-shaped support frame. The light sources emit directed light rays to the light detectors so that each of the light detector is adapted to receive light signal only from an associated light source. This configuration of the sensor net has the drawback that it is not available for determining geometrical parameters of the ball, therefore only balls with a predetermined radius may be used.

There is a need therefore to provide a measuring system that can be applied for measuring not only the velocity and the direction of travel of a ball, but also the diameter of the ball in any kind of ball games without substantially limiting the free motion of the players. Particularly in the ball games including gates, a substantial need has been arisen for the accurate measuring of the velocity and the direction of travel of a ball flying into a gate and for measuring the precise position of such balls.

The present invention is based on the recognition that the velocity, the direction of travel and the planar position of a ball flying through a plane may be measured by a single complex detector unit that comprises a plurality of optical transmitters and a plurality of optical sensors (optical receivers) in the measurement plane, wherein the optical transmitters and the optical receivers are arranged opposite to each other so that the ball traversing said plane always cross at least two beams, each of said beams mutually forming an angle relatively each other and including at least two parallel light signals. In such an arrangement, the above mentioned flying parameters of the ball can be definitely determined on the basis of the spatial position of the transmitters and receivers associated with the light signals interrupted by the ball, and the time moments of interrupt and the masking time periods of the light signals interrupted by the ball flying through the measurement plane.

The above objects are achieved by providing an optical measuring method according to claim 1 and an optical measuring system according to claim 5. Preferred embodiments of the method and the system according to the invention are defined by the dependent claims.

The present invention will be now described in detail with reference to the drawings, in which:

Figure 1 is a schematic block diagram of the optical measuring system according to the present invention;
Figure 2 illustrates the physical configuration of the optical transmitters and optical receivers showing a ball flying through the measurement plane;
Figure 3 shows a functional block diagram of the central control and processing unit of the measurement system;
Figure 4 shows a geometrical model used for determining the traversing position of the ball in the measurement plane;
Figure 5 illustrates a geometrical model used for determining the horizontal velocity of the ball in the measurement plane; and
Figure 6 is a flow diagram showing the main steps of the method according to the invention.

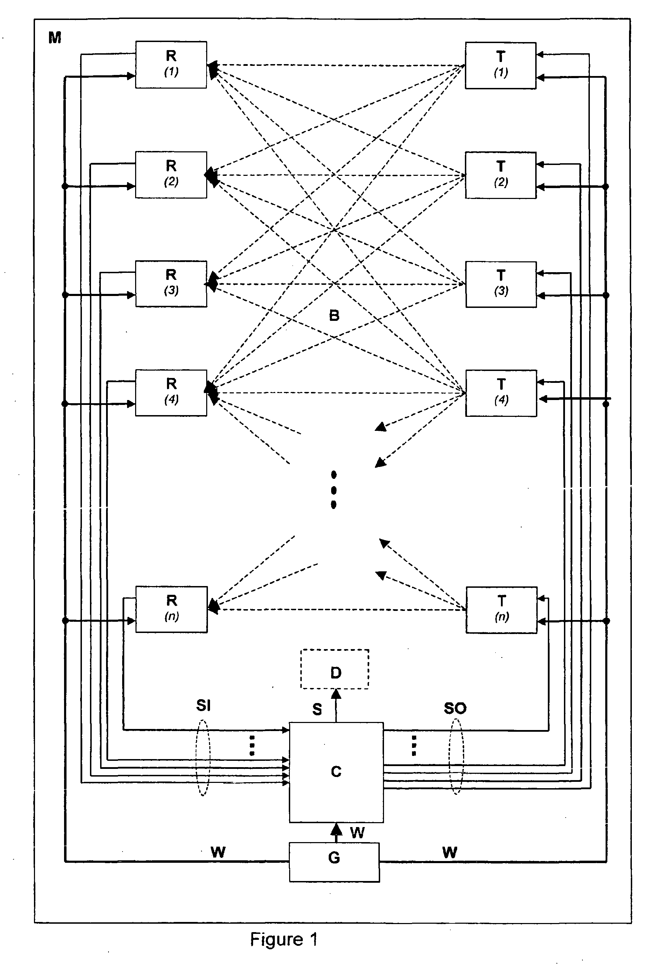

Figure 1 schematically illustrates the arrangement of the components of the optical measuring system according to the present invention. In a predetermined measurement plane M, for example in the plane of a gate in a ball game, a plurality of optical transmitters T, and opposite to them, a plurality of optical receivers (detectors) R are arranged so that the light signals emitted by the transmitters T can be detected by the oppositely arranged receivers R with satisfying the above detailed requirements with respect to the arrangement of the optical transmitters and receivers, that is, a ball traversing said plane should always cross the path of at least two beams, wherein all of said beams mutually form an angle relatively to each other and include at least two parallel light signals.

As light signals, the transmitters T emit light signals modulated by short light pulses toward receivers R. The effects of the slowly changing external interfering lights are suppressed by a property designed filter the spectrum of the applied modulated optical signals is in a much higher frequency range as compared to the intensive ambient light sources or the interfering pulses caused by the rapidly moving shadow of a ball flying before the sun.

In the following, for the sake of simplicity, the light signals transmitted from a particular i-th transmitter T to a particular k-th receiver R, irrespective of the emitting mode of the transmitters T or the detecting mode of the receivers R, are referred to as light rays $B_{ik}$.

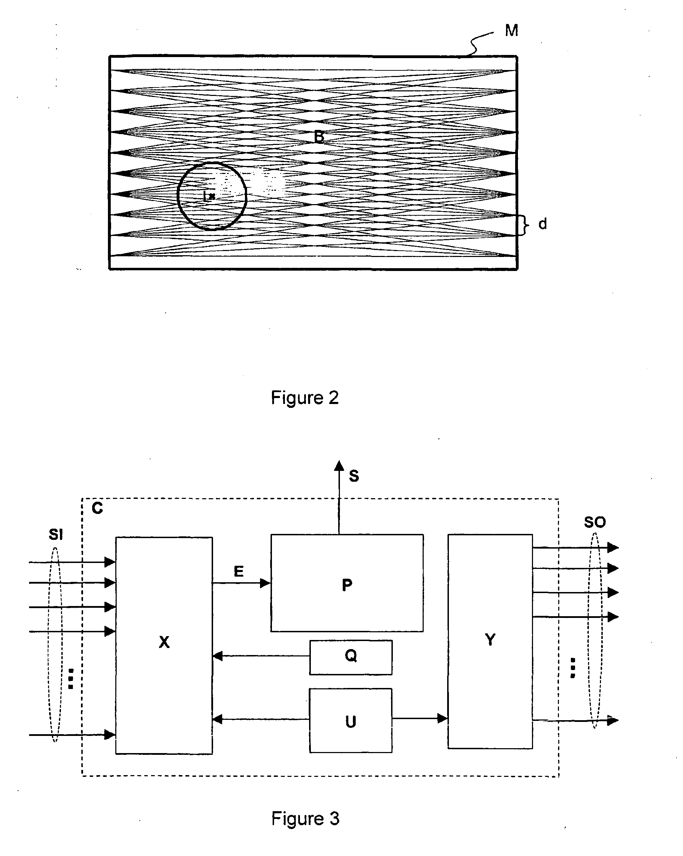

The distance d between the adjacent transmitters T and between the adjacent receivers R is such that a ball traversing the measurement plane M should always cross the light rays with satisfying the above defined conditions, that is, the ball traversing said plane should always cross the path of at least two beams, all of said beams mutually forming an angle relatively to each other and including at least two parallel light rays. In a preferred embodiment of the measuring system, the transmitters and the receivers are arranged as schematically illustrated in Figure 2.

The measuring configuration according to the present invention itself is also suitable for determining the diameter of the ball, in which case, however, the distance d between the adjacent transmitters T and between the adjacent receivers R should be set so that a ball traversing the measurement plane M cross the path of at least three parallel light rays $B_{ik}$.

According to the foregoing, for the value of the maximum distance $d_{max}$ between the adjacent transmitters T and between the adjacent receivers R, the following constraint should be applied:

a) If the radius r of the ball is known, due to the aforementioned requirements, the following condition should be satisfied: $3*d_{max}=2*r$.
b) However, if the radius r of the ball is unknown and it is to be measured each time when the ball traverses the plane, the following condition should be satisfied: $4*d_{max}=2*r_{min}$, wherein $r_{min}$ is the least acceptable radius of the ball.

The operation of the transmitters T is controlled by a central control and processing unit C in a manner that the transmitters T are controlled through control signals transmitted via lines SO in a predetermined sequence according to a time divisional schedule. Thus in a particular time slot, only the transmitter(s) associated with said time stot emit(s) light signals, in the form of at least one light pulse.

The receivers R are adapted to receive the light signals emitted by the transmitters T. The receivers R output signals ready for digital processing via lines SI to the central control and processing unit C that calculates the flying parameters of the ball traversing the measurement plane in response to the incoming signals.

The central control and processing unit C outputs the results via a result output S for further processing them in an external processing unit D that carries out, for example, game control developed for the measuring equipment, or presents the measured data or other computed data interesting for the players and/or the viewers on a display, or it makes statistics.

The power supply of the central control and processing unit C, the transmitters T and the receivers R is provided by a power supply G via power lines W.

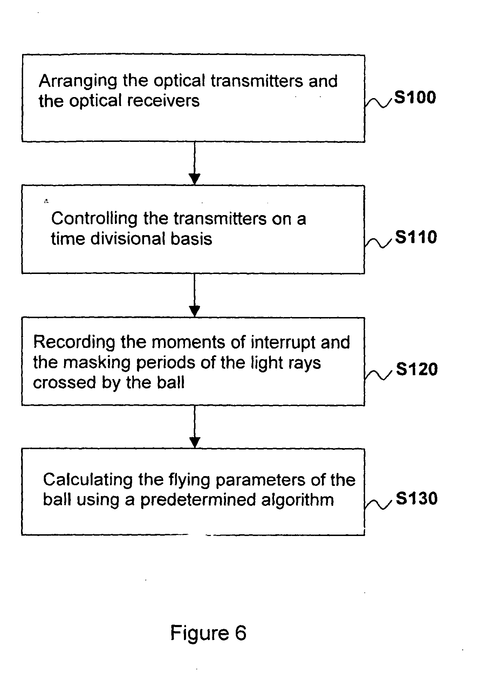

According to the above features, the method according to the present invention includes the following main steps as illustrated in Figure 6. First in step S100, a plurality of optical transmitters and a plurality of optical receivers adapted for detecting the light signals emitted by said optical transmitters are arranged opposite to each other in a measurement plane in a manner such that at least two of said receivers can simultaneously detect the signals of any one of said transmitters and any one of said receivers can detect the signals of at least two transmitters, and at the ball's traversing the measurement plane, the ball intersects at least two beams, each of said beams mutually forming an angle relative to each other and including at least two parallel light rays. In step S110, the operation of the transmitters are controlled in a time divisional manner, and in step S120, the moments of interrupt and the periods of masking for each of the light rays interrupted by the ball are recorded when the ball traverses the measurement plane between said transmitters and said receivers. Finally, in step S130, based on (i) the moments of interrupt and the masking periods of all of the light rays and (ii) the spatial position of said transmitters and said receivers, the traveling direction, the velocity and the position of the ball when traversing the measurement plane is computed using a predetermined computing algorithm.

Now the structure of the central control and processing unit C will be described with reference to Figure 3.

The transmitter controller unit Y activates each of the transmitters via the lines SO in a time divisional multiplexing mode. The transmitter controller unit Y operates synchronously with the event detector X. Synchronization and scheduling are managed by a scheduler U.

The event detector X is responsible for recognizing the masking (interrupt) of the light rays emitted by the transmitters both at the moments of entering and the moments of exiting, wherein the moment of entering is defined as the moment when the ball or another object meets a light ray, whereas the moment of exiting is defined as the moment when the ball or another object leaves the light ray in question. Both of the aforementioned events generate two time data associated with each of the masked light rays $B_{ik}$ in the event detector X, said time data specifying the exact moments when the ball starts masking the particular light rays B, and when masking of the particular light rays B finishes. Based on these time data, a double valued function of time, i.e. a so called masking function may be assigned to each of the light rays $B_{ik}$. The event detector X is provided with the absolute time by a high precision clock Q. When the event detector X detects events, i.e. the masking of light rays B, it generates respective event data (time data) E for an event processing and computing unit P that, on the basis of the information carried by the event data E, determines from which moment and how long each of the light rays $B_{ik}$ has been masked, and in response to these data and the parameters relating to the physical configuration of the measuring system (e.g. the spatial position of the transmitters and the receivers relative to each other), the event processing and computing unit P calculates the various flying data (e.g. velocity, position, incidence angle, etc.) of the ball traversing the measurement plane (e.g. the gate). The computed data may be transmitted from the event processing and computing unit P via the result output S through an external processing unit D for further processing or displaying.

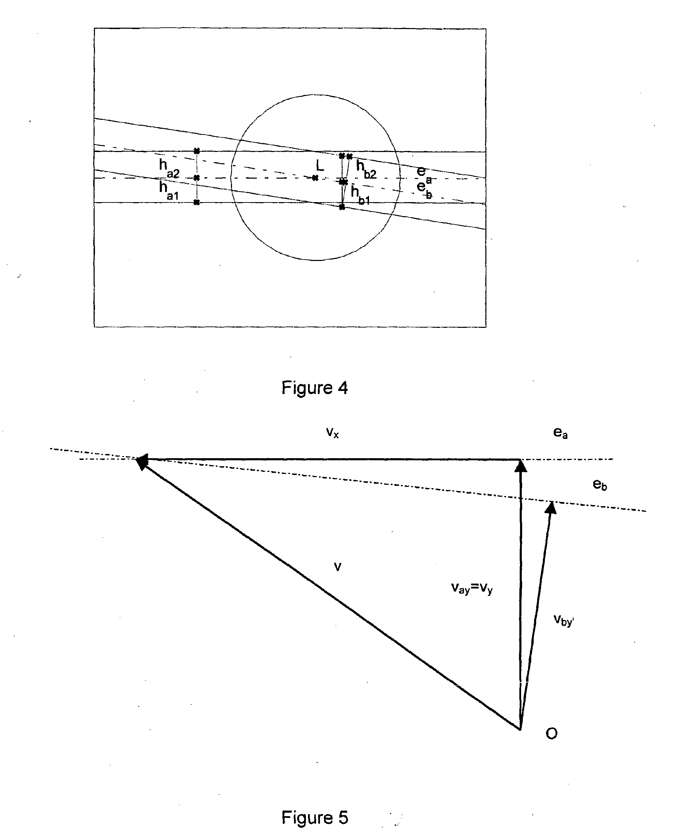

Next, a measuring procedure using the measuring system according to the present invention will be described with reference to Figures 4 and 5.

By means of the clock Q of the control and processing unit C and the event detector X, the moments when masking of the light rays finishes and stops are measured and forwarded to the event processing and computing unit P. After detecting the ball's traversing the measurement plane by its entire volume, velocity of the ball and the coordinates of the center of the ball traversing the measurement plane are determined by using the measured time data relating to the light rays.

The measuring system is configured so that during traversing the measurement plane, the ball normally masks preferably 3 to 6 parallel light rays. Accordingly, upon the traversing of the ball, 6 to 12 time data are produced for each of the masked light rays. For the computations according to the applied algorithm, at least five time data are already enough for one group of parallel light rays. By using even more measured time data, the precision of the measurements may be increased. In the measurements, parallel light rays of different inclination are taken into account. For obtaining the final result, 42 to 84 measured time data are normally available. According to experiments that have been carried out, even as low as 12 to 24 time data may be enough for a substantially precise determination of the velocity and the coordinates of the point of traversing through the measurement plane.

It is to be nosed, however, that during a measurement, it can often occur that in addition to the ball, another object (e.g. the hand of the goalkeeper, water droplet, flying dust particles, etc.) also traverses the measurement plane. Concerning these situations, the disturbing data that might result the detection of a false event should be separated from the data representing a spherical shape corresponding to the ball. This task may be performed by applying filtering algorithms.

Next, the method of computing the flying parameters of the ball will be described.

During the measuring procedure, the velocity (vz; vy) of the ball, the radius r of the ball, and the distances from the light rays are calculated from the measured data of the parallel light rays as follows (see Figure 5).

Hereafter the orthogonal plane is defined as a plane perpendicular to the parallel light rays used for the relating computations and including the central point of the ball when said central point is situating in the measurement plane.

A ray event is defined as the moment when the traversing ball interrupts a light ray or when the masking caused by the ball has been just finished.

During the computations, the motion of the ball is assumed to be a linear steady motion, and the ball is assumed to have a perfect spherical shape.

Let

r: radius of the ball

Az: distance of the central point of the bail from the measurement-plane at the moment t=0 (The moment t=0 may be set arbitrarily.)

Ay: distance of the projection of the central point of the ball into the measurement plane from a reference light ray at the moment t=0

vz: velocity component of the ball perpendicular to the measurement plane

vy: velocity component of the ball parallel to the intersection line of the orthogonal plane and the measurement plane

yi: distance between the light ray associated with the i-th ray event and the reference light ray

ti: time of the i-th ray event

The measuring system according to the invention is adapted to directly measure the values ti. According to the foregoing, the coordinates of the central point of the ball in the plane perpendicular to the light rays at the moment t may be expressed as follows:

$$Pz(t) = Az + vz \cdot t$$

$$Py(t) = Ay + vy \cdot t$$

It is known that at the moment of a ray event, the distance of the central point of the ball from the reached light ray is exactly r. One of the coordinates (i.e. the coordinate z) of the point of the intersection of the interrupted light ray and the orthogonal plane is always equal to zero. The other coordinate (i.e. coordinate y) of the interrupted light ray depends on which light ray is dealt with.

The purpose of the calculations is to determine the unknown parameters r, vz, vy, Az, Ay so that the square of the distance between the point [Pz(ti), Py(ti)] and [0; yi] do approximate $r^2$ as much as possible. (The squares of the distances are used so that the calculations be easier.) The unknown parameters are to be determined by minimizing the squares of the differences resulting from all of the measurements. Consequently, the objective function may be expressed as:

$$\sum \left[ (Az + vz \cdot ti)^2 + (Ay + vy \cdot ti - yi)^2 - r^2 \right]^2 = Minimum$$

Let us define

$$Z := \left[ (Az + vz \cdot ti)^2 + (Ay + vy \cdot ti - y_i)^2 - r^2 \right]^2$$

By the derivation of the objective function by the unknown parameters, the following set of equations can be obtained:

$$r: \sum 2 \cdot Z \cdot -2 \cdot r = 0$$

$$Az: \sum 2 \cdot Z \cdot 2 \cdot (Az + vz \cdot ti) = 0$$

$$vz: \sum 2 \cdot Z \cdot 2 \cdot (Az + vz \cdot ti) \cdot ti = 0$$

$$Ay: \sum 2 \cdot Z \cdot 2 \cdot (Ay + vy \cdot ti - yi) = 0$$

$$vy: \sum 2 \cdot Z \cdot 2 \cdot (Ay + vy \cdot ti - yi) \cdot ti = 0$$

The calculations may become easier if the following constrains are taken into consideration.

- $r \neq 0$, as the radius of the ball can obviously only be a value greater than zero.

- $vz \neq 0$, as otherwise the ball would move in parallel to the measurement plane, that is it would not traverse the measurement plane.

After simplifications, the following set of equations is obtained:

$$r : \sum Z = 0$$

$$Az : \sum Z \cdot ti = 0$$

$$vz : \sum Z \cdot ti^2 = 0$$

$$Ay : \sum Z \cdot yi = 0$$

$$vy : \sum Z \cdot yi \cdot ti = 0$$

Now the parameter Z can be expressed as follows:

$$Z := x1 + x2 \cdot ti + x3 \cdot ti^2 + x4 \cdot yi + x5 \cdot yi \cdot ti + yi^2$$

where

$$x1 = Az^2 + Ay^2 - r^2$$

$$x2 = 2 \cdot Az \cdot vz + 2 \cdot Ay \cdot vy$$

$$x3 = vz^2 + vy^2$$

$$x4 = -2 \cdot Ay$$

$$x5 = -2 \cdot vy$$

By using the above expressions, the set of equations may be formulated as follows:

$$\sum \begin{bmatrix} 1 & ti & ti^2 & yi & yi \cdot ti \\ ti & ti^2 & ti^3 & yi \cdot ti & yi \cdot ti^2 \\ ti^2 & ti^3 & ti^4 & yi \cdot ti^2 & yi \cdot ti^3 \\ yi & ti \cdot yi & ti^2 \cdot yi & yi^2 & ti \cdot yi^2 \\ yi^2 & ti^2 \cdot yi & ti^3 \cdot yi & ti \cdot yi^2 & ti^2 \cdot yi^2 \end{bmatrix} \begin{bmatrix} x1 \\ x2 \\ x3 \\ x4 \\ x5 \end{bmatrix} = \sum \begin{bmatrix} -yi^2 \\ -yi^2 \cdot ti \\ -yi^2 \cdot ti^2 \\ -yi^3 \\ -yi^3 \cdot ti \end{bmatrix}$$

Using the values x1, x2, x3, x4, x5 resulting from the above set of equations, the original parameters may be calculated.

$$vy = \frac{-x5}{2}$$

$$Ay = \frac{-x4}{2}$$

$$vz = \sqrt{x3 - vy^2}$$

$$Az = x2 - 2 \cdot Ay \cdot vy$$

$$r = \sqrt{Az^2 + Ay^2 - x1}$$

Knowing that the equation

$$vz \cdot tks + Az = 0$$

is satisfied in the measurement plane, where tks is the moment when the central point of the ball is just residing in the measurement plane. As a result,

$$tks = \frac{-Az}{vz} \quad \text{and} \quad h = Ay + vy\left(\frac{-Az}{vz}\right)$$

Thus the distance between the central point of the traversing and the reference light ray is obtained.

Hereafter, the position of the ball's traverse through the measurement plane, relatively to a frame, for example a gate, will be determined. The coordinates of the central point of the ball in the measurement plane can be calculated using the geometrical model illustrated in Figure 4.

The values h calculated from the data of the horizontal light rays using the above described relationships directly provide the vertical position $L_y$ of the central point of the ball relative to the lower light ray. Regarding the horizontal coordinate $L_x$ of the traverse of the flying ball, the horizontal pairs of rays do not provide information, therefore it may take any value. With reference to Figure 4, the possible positions of the central point of the ball calculated from the horizontal pair of rays may situate along the line $e_a$.

The values h calculated from parallel light rays having different inclinations with respect to the horizontal direction, by using the above described relationships, correspond to the distance between the central point of the ball and the lower light ray. As the component of the position of the central point of the ball parallel to the examined pair of the parallel light rays may be arbitrary, the possible traversing locations constitute a line parallel to the light rays in question. In Figure 4, the possible traversing positions calculated from the inclined light rays in question, situate along the line $e_b$.

The lines calculated from the parallel light rays having different inclinations intersect each other in one point, namely at the point where the center of the ball traverses the measurement plane (point L). According to Figure 4, this point of intersection can be calculated.

Now determination of the velocity components of the ball will be described. First, the velocity component of the ball perpendicular to the measurement plane will be determined. Since the velocity $v_z$ of the ball perpendicular to the measurement plane should always be the same value if the calculations are based on any parallel pairs of rays, this velocity component can be directly obtained from the aforementioned calculations.

In the next step, the horizontal velocity of the ball in the measurement plane will be determined. In the case of horizontally extending pairs of rays, the vertical velocity $v_y$ of the ball is also resulted directly from the above calculations. As the horizontal velocity $v_x$ of the ball (that is, its velocity parallel to the reference line x in the measurement plane) is still unknown, the end point of the possible velocity vectors $v_{xy}$ situate along line $e_a$ according to the geometrical model shown in Figure 5.

When taking parallel pairs of rays, each pair having an inclination relative to the horizontal direction, the velocity component perpendicular to the particular light rays and parallel to the measurement plane is a calculated velocity $v_{y'}$. However, as the velocity component of the ball parallel to the particular inclined light rays may have any value, the components of the velocity vector parallel to the measurement plane constitute a line parallel to said inclined pair of rays, said line extending at a distance corresponding to $v_{y'}$ from the origin O. In Figure 5, this line is constituted by the line $e_b$. According to Figure 5, the velocity components can be calculated.

The lines calculated from the parallel light rays intersect each other in one point that defines the horizontal velocity $v_x$ and the vertical velocity $v_y$ of the ball.

In the foregoing, we explained that the traversing position and the velocity of the ball can be definitely calculated from any two parallel pairs of light rays having different inclination. The results obtained using different light rays may slightly differ because of the inaccuracies of the practical implementation.

In a preferred embodiment of the method according to the invention, in order to increase the accuracy or to eliminate the effects of the conditions disturbing the measurement, the different results calculated by using different light rays are classified or the final result is produced as a weighted average of all of the intermediate results. This can be done by using appropriate calculations in addition to the above mentioned calculations based on the least square method.

For the sake of the precise and reliable measurement, the traverse of objects other than the ball (e.g. the hand of the goalkeeper, water droplet, other flying objects, etc.) through the measurement plane should be filtered out. Regarding the events resulting in the masking of the light rays, when the arithmetical averages of the moments of entering and exiting associated with the events produced by the motion of the ball are calculated, some regularities may be recognized for the average values associated with each of the light rays. In the simplest case this means that these average values when arranged in a sequence of the adjacent light rays, constitute substantially an arithmetical series. In a more complicated case (e.g. for slow balls or for balls glancing off along the measurement plane), the above mentioned arithmetical series can be produced only by means of further transformations, but in the most cases such a transformation is available.

If the events are not caused by a traversing ball, but for example, by a member of the player's body or by any other flying object, the average values calculated for such masking events will not produce even an approximately regular arithmetical series using any of the above mentioned methods, thus it can be established that these events are produced not by a traversing ball. As the measurement data are never absolutely exact, a regularity can be established only with a certain tolerance of precision. By using this method, however, the major part of the disturbing effects is eliminated already the in course of the measurement process.

The central control and processing unit of the measurement system according to the invention may be configured corresponding to the particular ball game. The measurement data are processed by the processor immediately (almost simultaneously with the events) according to the aforementioned algorithms, and the results of the processing is transmitted by the processor preferably through wireless communication interconnections (e.g. Wi-fi) to a suitable external device for further processing or displaying.

In the calculations it is assumed that the ball is moving linearly and steadily while traversing the measurement plane defined by the light rays. The effect on the gravitation is negligible for rapidly flying balls because the extent of the free-falling of the ball is minimal due to the short traversing period. In case of slowly flying balls, however, accuracy of the velocity measurement can be greatly increased if the free-falling of the ball is also taken into consideration. With respect to the fact that these calculations are obvious for a person skilled in the art, the detailed description thereof is omitted.

**Claims**

1.    An optical measuring method for determining the traveling direction, the velocity and the position of a ball traversing through a measurement plane in ball games, **characterized in that** the method comprises

- arranging a plurality of optical transmitters and a plurality of optical receivers opposite to each other along the opposite sides of a measurement plane, said optical receivers being adapted for detecting light signals emitted by said optical transmitters wherein said optical transmitters and said optical receivers are arranged in a manner that at least two of said receivers can simultaneously detect the light signals of any one of said transmitters and any one of said receivers can detect the light signals of at least two transmitters, and at the ball's traversing the measurement plane, the ball intersects at least two beams, each of said beams including at least two parallel light rays and mutually forming an angle relative to each other (S100),
- controlling the operation of the transmitters in a predetermined sequence according to a time-divisional schedule (S110),
- recording the moments of interrupt and the periods of masking for each of the light rays interrupted by the ball when traversing the measurement plane between said transmitters and said receivers (S120), and
- computing the traveling direction, the velocity and the position of the ball when the ball traverses the measurement plane, based on (i) the moments of interrupt and the masking periods of all of the light rays and (ii) the spatial position of said transmitters and said receivers, using a predetermined computing algorithm (S130).

2.  The method according to claim 1, **characterized in that** pulse modulated light rays with a predefined period are emitted from the optical transmitters as light signals.

3.  The method according to claim 1 or 2, **characterized in that** when a ball with a known diameter is used, the distance between the adjacent transmitters and the distance between the adjacent receivers are set to a distance equal to at most one-third of the ball's diameter, and the ball's known diameter is also used for determining the traveling direction, the velocity and the position of the ball in the measurement plane.

4.  The method according to claim 1 or 2, **characterized in that** when a ball with unknown diameter is used, the distance between the adjacent transmitters and the distance between the adjacent receivers are set to a distance equal to at most one-fourth of the ball's acceptable least diameter, and the diameter of the ball is also calculated at least once, using said computing algorithm.

5.  An optical measuring system for determining the traveling direction, the velocity and the position of a ball traversing a measurement plane in ball games, **characterized in that** the measurement system comprises:

    - a plurality of optical transmitters (T) and a plurality of optical receivers (R) adapted for detecting light signals emitted by said plurality of optical transmitters (T), said optical transmitters (T) and optical receivers (R) being arranged opposite to each other along the opposite sides of a measurement plane (M), wherein said optical transmitters (T) and said optical receivers are arranged in a manner that the distance (d) between the adjacent transmitters (T) and the distance (d) between the adjacent receivers (R) are equal to at most one-third of the ball's diameter,
    - a central control and processing unit (C) connected to said transmitters (T) via control lines (SO) for controlling the operation thereof in a predetermined sequence according to a time-divisional schedule; said central control and processing unit (C) being further connected to said receivers (R) via signal lines (SI) for receiving the light signals detected thereby, and
    - a power supply (G) for powering said transmitters (T), said receivers (R), said central control and processing unit (C) via power lines (W).

6.  The measuring system according to claim 5, **characterized in that** the said central control and processing unit (C) comprises a result output (S), which in turn, is connected to an external processing unit (D).

7.  The measuring system according to claim 5 or 6, **characterized in that** said optical transmitters (T) are adapted to emit pulse modulated light rays with a predetermined period.

8.  The measuring system according to any one of claims 5 to 7, **characterized in that** the distance (d) between the adjacent transmitters (T) and the distance between the adjacent receivers (R) are equal to at most one-fourth of the ball's acceptable least diameter.

**Patentansprüche**

1.  Optisches Messverfahren zur Bestimmung der Fortbewegungsrichtung, der Geschwindigkeit und der Position eines eine Messebene passierenden Balles bei Ballspielen, **dadurch gekennzeichnet, dass** das Verfahren aus den folgenden Schritten besteht:

    - Anordnung einer Mehrzahl von optischen Sendern und einer Mehrzahl von optischen Empfängern einander gegenüber entlang der gegenüberliegenden Seiten einer Messebene, wobei die optischen Empfänger zur Wahrnehmung der durch die optischen Sender ausgestrahlten Lichtsignale vorgesehen sind, wobei die optischen Sender und die optischen Empfänger in der Weise angeordnet sind, dass die Lichtsignale eines beliebigen Senders von mindestens zwei Empfängern gleichzeitig wahrgenommen werden können und ein beliebiger Empfänger die Lichtsignale von mindestens zwei Sendern wahrnehmen kann, und während der Ball die Messebene passiert, durchquert er mindestens zwei Strahlenbündel, wobei jeder der Strahlenbündel mindestens zwei parallele Lichtstrahlen umfasst, und diese miteinander einen Winkel einschließen (S100),

- Steuerung des Betriebes der Sender in einer vorbestimmten Sequenz entsprechend einer zeitlich geteilten Taktangabe (S110),

- Registrierung der Unterbrechungsmomente und der Verdeckungsperioden von jedem durch den Ball unterbrochenen Lichtstrahl, wenn der Ball die Messebene zwischen den Sendern und den Empfängern passiert (S120), und

- Berechnung der Fortbewegungsrichtung, der Geschwindigkeit und der Position des Balles, wenn der Ball die Messebene passiert, aufgrund (i) der Unterbrechungsmomente und der Verdeckungsperioden aller Lichtstrahlen und (ii) der räumlichen Position der Sender und der Empfänger, unter Verwendung eines vorbestimmten Berechnungsalgorithmus (S130).

2. Verfahren nach Anspruch 1, **dadurch gekennzeichnet, dass** aus den optischen Sendern impulsmodulierte Lichtstrahlen vorbestimmter Zeitdauer als Lichtsignale ausgestrahlt werden.

3. Verfahren nach Anspruch 1 oder 2, **dadurch gekennzeichnet, dass** wenn ein Ball mit einem vorbekannten Durchmesser benutzt wird, der Abstand zwischen den benachbarten Sendern und den benachbarten Empfängern auf einen solchen Abstand eingestellt wird, der höchstens ein Drittel des Balldurchmessers beträgt und zur Berechnung der Fortbewegungsrichtung, der Geschwindigkeit und der in der Messebene belegten Position des Balles auch der bekannte Durchmesser des Balles verwendet wird.

4. Verfahren nach Anspruch 1 oder 2, **dadurch gekennzeichnet, dass** wenn ein Ball mit einem unbekannten Durchmesser benutzt wird, der Abstand zwischen den benachbarten Sendern und den benachbarten Empfängern auf einen solchen Abstand eingestellt wird, der höchstens ein Viertel des kleinsten zulässigen Balldurchmessers beträgt und mit Hilfe des Berechnungsalgorithmus wenigstens einmal auch der Balldurchmesser berechnet wird.

5. Optisches Messsystem zur Bestimmung der Fortbewegungsrichtung, der Geschwindigkeit und der Position eines eine Messebene passierenden Balles bei Ballspielen, **dadurch gekennzeichnet, dass** das Messsystem

- eine Mehrzahl von optischen Sendern (T) und eine Mehrzahl von optischen Empfängern (R) für die Wahrnehmung der durch die Mehrzahl von optischen Sendern (T) ausgestrahlten Lichtsignale, wobei die optischen Sender (T) und die optischen Empfänger (R) einander gegenüber entlang der gegenüberliegenden Seiten einer Messebene (M) angeordnet sind, wobei die optischen Sender (T) und die optischen Empfänger (R) in der Weise angeordnet sind, dass der Abstand (d) zwischen den benachbarten Sendern (T) und der Abstand (d) zwischen den benachbarten Empfängern (R) höchstens ein Drittel des Balldurchmessers betragen,

- eine zentrale Steuer- und Verarbeitungseinheit (C), die mit den Sendern (T) über Steuerlinien (SO) zur Steuerung von deren Betrieb in einer vorbestimmten Sequenz entsprechend einer zeitlich geteilten Taktangabe verbunden ist, wobei die zentrale Steuer- und Verarbeitungseinheit (C) weiterhin mit den Empfängern (R) über Signalleitungen (SI) für den Empfang der durch die Empfänger wahrgenommenen Lichtsignale verbunden ist, und

- ein Netzteil (G) für die Stromversorgung der Sender (T), der Empfänger (R) und der zentralen Steuer- und Verarbeitungseinheit (C) über Versorgungsleitungen (W)

enthält.

6. Messsystem nach Anspruch 5, **dadurch gekennzeichnet, dass** die zentrale Steuer- und Verarbeitungseinheit (C) einen Ergebnisausgang (S) aufweist, an welchem eine äußere Verarbeitungseinheit (D) angeschlossen ist.

7. Messsystem nach Anspruch 5 oder 6, **dadurch gekennzeichnet, dass** die optischen Sender (T) für die Ausstrahlung von impulsmodulierten Lichtstrahlen vorbestimmter Zeitdauer vorgesehen sind.

8. Messsystem nach einem der Ansprüche 5 bis 7, **dadurch gekennzeichnet, dass** der Abstand (d) zwischen den benachbarten Sendern (T) und der Abstand (d) zwischen den benachbarten Empfängern (R) höchstens ein Viertel des kleinsten zulässigen Balldurchmessers betragen.

**Revendications**

1. Procédé de mesure optique pour déterminer le sens de déplacement, la vitesse et la position d'une balle traversant un plan de mesure dans des jeux de balle, **caractérisé en ce que** le procédé comprend :

   - l'agencement d'une pluralité d'émetteurs optiques et d'une pluralité de récepteurs optiques opposés les uns aux autres sur les côtés opposés d'un plan de mesure, lesdits récepteurs optiques étant adaptés à détecter des signaux lumineux émis par lesdits émetteurs optiques, dans lequel lesdits émetteurs optiques et lesdits récepteurs optiques sont agencés de telle manière qu'au moins deux desdits récepteurs peuvent détecter simultanément les signaux lumineux de l'un quelconque desdits émetteurs et que l'un quelconque desdits récepteurs peut détecter les signaux lumineux d'au moins deux émetteurs, et au moment où la balle traverse le plan de mesure, la balle coupe au moins deux faisceaux, chacun desdits faisceaux incluant au moins deux rayons lumineux parallèles et formant mutuellement un angle l'un par rapport à l'autre (S100),
   - la commande du fonctionnement des émetteurs selon une séquence prédéterminée conformément à un programme de division temporelle (S110),
   - l'enregistrement des moments d'interruption et des périodes de masquage pour chacun des rayons lumineux interrompus par la balle lorsqu'elle traverse le plan de mesure entre lesdits émetteurs et lesdits récepteurs (S120), et
   - le calcul du sens de déplacement, de la vitesse et de la position de la balle lorsque la balle traverse le plan de mesure, sur la base (i) des moments d'interruption et des périodes de masquage de tous les rayons lumineux et (ii) de la position spatiale desdits émetteurs et desdits récepteurs, en utilisant un algorithme prédéterminé de calcul (S130).

2. Procédé selon la revendication 1, **caractérisé en ce que** des rayons lumineux à modulation par impulsions avec une période prédéfinie sont émis par les émetteurs optiques comme signaux lumineux.

3. Procédé selon la revendication 1 ou 2, **caractérisé en ce que**, lorsqu'une balle d'un diamètre connu est utilisée, la distance entre les émetteurs adjacents et la distance entre les récepteurs adjacents sont fixées à une distance égale à au plus un tiers du diamètre de la balle, et le diamètre connu de la balle est également utilisé pour déterminer le sens de déplacement, la vitesse et la position de la balle dans le plan de mesure.

4. Procédé selon la revendication 1 ou 2, **caractérisé en ce que**, lorsqu'une balle d'un diamètre inconnu est utilisée, la distance entre les émetteurs adjacents et la distance entre les récepteurs adjacents sont fixées à une distance égale à au plus un quart du plus petit diamètre acceptable de la balle, et le diamètre de la balle est également calculé au moins une fois, en utilisant ledit algorithme de calcul.

5. Système de mesure optique pour déterminer le sens de déplacement, la vitesse et la position d'une balle traversant un plan de mesure dans des jeux de balle, **caractérisé en ce que** le système comprend :

   - une pluralité d'émetteurs optiques (T) et une pluralité de récepteurs optiques (R) adaptés à détecter des signaux lumineux émis par ladite pluralité d'émetteurs optiques (T), lesdits émetteurs optiques (T) et récepteurs optiques (R) étant agencés de façon opposée les uns aux autres sur les côtés opposés d'un plan de mesure (M), dans lequel lesdits émetteurs optiques (T) et lesdits récepteurs optiques sont agencés de telle manière que la distance (d) entre les émetteurs (T) adjacents et la distance (d) entre les récepteurs (R) adjacents sont égales à au plus un tiers du diamètre de la balle,
   - une unité centrale de commande et de traitement (C) connectée auxdits émetteurs (T) par l'intermédiaire de lignes de commande (SO) pour commander le fonctionnement de ceux-ci selon une séquence prédéterminée conformément à un programme de division temporelle, ladite unité centrale de commande et de traitement (C) étant en outre connectée auxdits récepteurs (R) par l'intermédiaire de lignes de signaux (SI) pour recevoir les signaux lumineux détectés par ceux-ci, et
   - une alimentation électrique (G) pour alimenter lesdits émetteurs (T), lesdits récepteurs (R), ladite unité centrale de commande et de traitement (C) par l'intermédiaire de lignes d'alimentation (W).

6. Système de mesure selon la revendication 5, **caractérisé en ce que** ladite unité centrale de commande et de traitement (C) comprend une sortie de résultats (S) qui elle-même est connectée à une unité de traitement externe (D).

7. Système de mesure selon la revendication 5 ou 6, **caractérisé en ce que** lesdits émetteurs optiques (T) sont adaptés à émettre des rayons lumineux à modulation par impulsions avec une période prédéfinie.

8. Système de mesure selon l'une quelconque des revendications 5 à 7, **caractérisé en ce que** la distance (d) entre les émetteurs (T) adjacents et la distance entre les récepteurs (R) adjacents sont égales à au plus un quart du plus petit diamètre acceptable de la balle.

Figure 1

M

B

Lx

d

Figure 2

C

S

SI

SO

X

E

P

Q

U

Y

Figure 3

Figure 4

Figure 5

Arranging the optical transmitters and
the optical receivers — S100

Controlling the transmitters on a
time divisional basis — S110

Recording the moments of interrupt and
the masking periods of the light rays
crossed by the ball — S120

Calculating the flying parameters of the
ball using a predetermined algorithm — S130

Figure 6

**REFERENCES CITED IN THE DESCRIPTION**

**Patent documents cited in the description**

- US 5481355 A

- WO 0100285 A